# EUROPEAN PATENT APPLICATION

(11) **EP 2 338 853 A2**
(43) Date of publication of application: **29.06.2011**
(21) Application number: 10397523.1
(22) Date of filing: 14.12.2010
(51) Int. Cl.: C03C 25/14, C03C 25/26, C03C 25/48

(54) **Mineral wool composite material and method for manufacturing it**

(30) Priority: 23.12.2009 FI 20096391
(71) Applicant: Paroc Oy Ab, 00620 Helsinki (FI)
(72) Inventor: Peltola, Jenni, 20610 Turku (FI); Bergman, Niklas, 21600 Pargas (FI); Fagerlund, Johanna, 21600 Pargas (FI); Lehtinen, Niina, 20100 Turku (FI); Lindgren, Tommy, 20540 Turku (FI); Åstrand, Erik, 21600 Pargas (FI)
(74) Representative: Karvinen, Leena Maria

(57) **Abstract**

The invention relates to a mineral wool composite material to be used as an insulation material and to a method for manufacturing it. The mineral wool composite material according to the present invention comprises mineral wool fibres and aerogel material uniformly distibuted within the mineral fibres. The method comprises a step of adding aerogel material to the mass of the fresh mineral wool fibres with the aid of the additions means for aerogel material.

## Description

The invention relates to a mineral wool composite material to be used as an insulation material and to a method for manufacturing it. More precisely the mineral wool composite material according to the present invention comprises mineral wool fibres and aerogel material uniformly distibuted within the mineral fibres. The method comprises a step of adding aerogel material to the mass of the fresh mineral wool fibres with the aid of the additions means for aerogel material.

Acceleration of climate change and rise in prices of energy increases challenges of improving energy efficiency in buildings. The best kind of efficiency in respect of insulation is the energy that is not used. To reach this target better insulation materials have to be developed. It is although not enough that the insulation materials have excellent insulation proprerties. Additionally they should be easy to handle, as thin and light as possible, flexible or rigid depending on the target application and fulfill required mechanical strength properties. These are properties that can be found separately from different prior art materials. The optimal thing would be to be able to combine all the required properties in a one single product.

Mineral wool has been manufactured for a good 100 years. Mineral fibres are manufactured by melting and centrifuging suitable mineral raw materials, such as stone, glass, ceramics, slag or the like. Mineral fibre slabs or panels conventionally contain a binder in addition to the mineral fibres. The general properties of mineral wool and above all its isolating capacity have made it into a standard material with almost innumerable fields of insulation application, primarily for heat and sound insulation, especially within the construction industry. From an economical and the users view the isolating capacity is undoubtedly the most essential property but also its fire retarding ability is of a great importance. Anyway the isolation capacity of the mineral wool material has of course its limit and in order to be able to answer to today's challenges the extra "capacity" has to be obtained somewhere else.

When it is a question of only thermal insulation properties aerogel types of materials seem to be the number one alternative at the moment. Aerogel is a low-density, solid-state material with extremely efficient thermal insulation properties. When considering the utilization of the aerogel materials as (building) insulation materials their property known as friability causes problems in this respect. Also properties like dustiness, poor mechanical stability, brittleness, non-flexibility and fragility narrow the applicability of the aerogel materials in the field of insulation.

It is known from the prior art to combine aerogel materials with different components by different methods to obtain insulation materials/composites with desired properties. Different aerogel composite materials are disclosed for example in the following patent publications; US 6,316,092; US 2006/0125158; US 6,143,400; US 5,786,059; US 2,893,962; US 7,078,359 and US 2007/173157.

The prior art aerogel composite materials typically have a layered structure, in which case the delamination of the different layers is possible and the insulation capacity enhancing property of the aerogel material may be better in some places than in others i.e. the aerogel material may be nonuniformly distributed. In some cases the aerogel/ fibre composite materials are very inflexible and thus difficult to transport, store and install.

The object of the present invention is to obtain an insulation material that has excellent insulation properties, is easy to handle, has no risk of delamination and can be used in several applications like in constructions as wall insulation. This is achieved by combining aerogel material with mineral wool material in such a way that the aerogel material is uniformly distributed within the mineral wool fibres.

The basic arrangement and method to be used in the manufacturing process according to the invention is disclosed in the WO 2008/084138 patent publication (Paroc Oy Ab), which is incorporated herein by reference.

In a typical method according to the invention
- mineral melt is fed to the mantle surface of the first rotor of the fiberising apparatus, wherefrom the mineral melt is thrown to the mantle surface of the second rotor, and then onwards to the mantle surface of a possible subsequent rotor, whereby mineral fibres are formed on the active mantle surfaces of the rotors, the fiberising apparatus comprising at least two, typically three or more, fiberising rotors which rotate around a horizontal or nearly horizontal axis,
- the formed fibres are blown from the active mantle surfaces of the rotors of the fiberising apparatus towards the collecting means, which are arranged at a distance from the fiberising apparatus, and blow-off means are used for the blowing, which blow-off means are arranged to surround the active mantle surfaces of the rotors of the fiberising apparatus and which are arranged in the immediate vicinity of the active mantle surfaces,
- an aerogel material is added with the aid of addition means for aerogel material arranged on the side of binder means, which is away from the blow-off means
- at least one binder component is added, with the aid of the binder means arranged in the immediate vicinity of the blow-off means, to the mixture of fresh fibres formed at the mantle surfaces and aerogel material, wherein
- the aerogel material is added to the mass of the fresh fibres, which are formed on the mantle surfaces.

By arranging the binder addition means to the immediate vicinity of the blow-off means and the addition means for aerogel material respectively outside these binder addition means, the binder distribution to the fibres is significantly improved. The improved distribution of the binder to the aerogel material allows the use of even larger amounts of aerogel material in the manufacturing process of composite product. In the method according to the invention the aerogel material "snatches" easily and efficiently into the flow of fresh fibres departing from the fiberising rotors, so that harmful flows going into different i.e. wrong directions are avoided. The present arrangement and method also allows increasing the amount of added binder, whereby the attachment of the aerogel material to the formed primary web can be improved. Additionally the aerogel material is uniformly distributed within the mineral or fresh fibres.

In this context, fresh fibres means mineral fibres, which are formed at the mantle surfaces of the fiberising rotors of the fiberising apparatus, and which immediately after being formed are guided with the aid of blowing towards a collecting member placed in front of the fiberising apparatus.

In this context aerogel material means any kind of aerogel material that has the properties required in the utilization of the above described process. In the following the term aerogel is used as a general term covering all different aerogel forms obtainable for example by different drying conditions; such as aerogels, cryogels and xerogels.

The aerogel content of the aerogel material can vary between 1 % and 100 %, preferably 10 -40 % and more preferably 15 - 30 % by weight, calculated from the total weight of the aerogel material.

According to a preferred embodiment the aerogel material comprises an aerogel component and a fibre component. In this case the amount of the aerogel component is preferably 10 - 40 % by weight and more preferably 15 - 30 % by weight, calculated from the total weight of the aerogel material.

According to one embodiment of the present invention the aerogel material is in the form of aerogel fibre net, meaning that the aerogel is impregnated into the fibre web, such as mineral fibre web (glass or stone fibres), synthetic fibre web or any other suitable fibre web, which is commercially available. The aerogel fibre net or web containing the fibre component and the aerogel component is teared into smallish fibre groups or bunches in order to obtain suitable aerogel material to be used in the process according to the invention. The size of the fibre groups or bunches can be between about 0.2 x 0.2 cm and about 5.0 x 5.0 cm.

In a preferred embodiment a waste fibre material is used. The waste fibre material can be for example recycled fibres, i.e. the fibres can originate from the parts of the mineral fibre web, which have been removed in "later" stages of the mineral wool manufacturing process, typically after the curing of the mineral fibre web. The removed parts, for example edge stripes, are then impregnated with a sol, for example with a silica-based sol and dried in a way to obtain aerogel material comprising an aerogel component and a fibre component. The use of waste fibre material has several advantages; first of all it is economical and ecological. Additionally it is advantageous when considering the impregnation step. The sols used for impregnation are typically strongly acidic or strongly alkaline, thus the biosoluble mineral fibres may dissolve during the impregnation process, especially the finest fibres. It is also difficult to impregnate the whole (thick) mineral wool slab thoroughly; usually the upper and bottom parts contain more aerogel than the middle part. The fine mineral fibres have a positive effect on the insulation capacity of the mineral fibre product. Thus, it is desirable to try to keep the finest fibres in the final product rather than to dissolve them. The impregnation of the waste mineral material such as edge stripes does occur much faster than the impregnation of the whole panels or webs and thus an optimal combination of fine mineral fibres together with the aerogel material is obtained. After impregnation and drying the aerogel material is teared into fibre groups or bunches having size between about 0.2 x 0.2 cm and 5.0 x 5.0 cm.

According to another embodiment the aerogel material can be in the form of an aerogel blanket or felt, which is pretreated by tearing it into smallish fibre groups or bunches.

According to still another embodiment the aerogel material can be in the form of aerogel granulates, which are pretreated in a suitable way if needed before utilizing in the process according to the invention.

Typically aerogel material is added in an amount of 5-30, preferably 21-27, more preferably 22-25 percent by weight, calculated from the weight of the final product.

The addition means for the aerogel material comprise at least one supply tube, preferably 2-6 supply tubes, more preferably 2-3 supply tubes. The supply tubes are generally manufactured of a wear-resistant material, such as stainless steel or basalt. The opening of the supply tube can be either round or angular. Normally the diameter of the opening of the supply tube, which functions as an addition means, is 60-160 mm, preferably 95-140 mm, more preferably 100-110 mm.

The diameter of the supply tube needs to be sufficient, so that the aerogel material does not stick to the supply tube, but it cannot be too large, in order to prevent formation of disturbing flows in the process. Preferably the nozzle tip of the supply tube is designed to increase the air flow so that the diameter of the supply tube decreases before the nozzle tip slowly to the final diameter of the opening, in other words the supply tube is tapered towards the opening.

The addition means for the aerogel material are preferably aligned so that the aerogel material is fed in the direction of the main fibre flow, which is directed from the fiberising rotors towards the collecting member. Thus the formation of surplus, deviating flows in the collecting chamber can be minimized.

The addition means for aerogel material are arranged on the side of the binder means which is away from the blow- off means, at a distance of 5-30 cm, preferably 5-20 cm from the binder means. The amount of aerogel material fed from each addition means does not need to be the same. Separate addition means can also be used to add different aerogel material from different addition means.

The addition means for the aerogel material can be arranged in the vicinity of the active mantle surfaces of the second and third rotor in the fiberising apparatus. Typically when using a four-rotor cascade-type fiberising apparatus the second and the third rotor produce quantitatively and qualitatively the best fibre material. If it is desired to mix the aerogel material with the main part of the fresh mineral fibres, the addition means are preferably arranged in the vicinity of the second and the third rotor, at a distance of for example about 150-400, preferably about 100-300 mm from the mantle surface of the rotor, on its outside.

Sometimes the addition means for aerogel material can be arranged below the fiberising apparatus. In that case the addition means generally comprise only one supply tube or supply gap. Also when added like this, the mixing of the aerogel material with the fresh fibres can be clearly improved when compared to earlier solutions. In a preferred embodiment of the invention the binder means are arranged in the immediate vicinity of the blow-off means. This means that the binder means are arranged very close to the blow-off means, even to an instant connection to the blow-off means. The binder means generally form a circle of binder means on the outside of the blow-off means, i.e. on the side which is away from the fiberising rotor, the distance from the blow-off means of which circle is 0-10 cm, typically 1- 7 cm, more typically 2-5 cm. In an embodiment of the invention the binder means may have been arranged in the middle of the fiberising rotors, on the side of them which is towards the collecting chamber. Binder or binders can also be added both from the binder means surrounding the mantle surfaces of the fiberising rotors and from the middle of the fibersing rotors.

The binder means are preferably arranged in intimate contact with the blow-off means, on the side of the blow-off means which is away from the fiberising apparatus.

The collecting member situated in front of the fiberising apparatus comprises at least one collecting surface. The collecting member can comprise for example one rotating cylinder, the surface of which can be arranged to be air permeable, for example with perforations or gaps. Suction means can be arranged inside the cylinder for suctioning air and other posible gases from the collecting chamber. At the same time the fibres are collected with the aid of suction to the surface of the collecting member.

In case of one collecting surface, when the amount of fibres to be collected grows, either because a large amount of fibres can be manufactured with the fiberising apparatus, or because it is desired to add a significant amounts of aerogel material to the manufactured fibre web, it is generally necessary to increase the speed of the collecting member, so that the weight of the primary web stays below the given limit value.

It is also possible to have two collecting surfaces, first and second, which are preferably arranged on top of each other in the vertical direction. The two cylinders may rotate in the same direction or towards each other. Double collecting intensifies the collection of mineral fibres, which is preferred especially when a fiberising apparatus with high production capacity is used. As stated above the weight of the primary fibre web collected onto the collecting member is not allowed to exceed a certain given limit value.

When the collecting member has two collecting surfaces, the addition means for aerogel material or the blow-off means, which are situated in the vicinity of the addition means, can be aligned so that the aerogel material is directed mainly to the first or to the second collecting surface. Thus two primary fibre webs can be manufactured at the same time, the properties of which webs differ from each other. The addition means or the blow-off means in their vicinity can be aligned for example so that the main part of the aerogel material is collected onto the first collecting member and main part of the mineral fibres is collected onto the second collecting member. The obtained different primary fibre webs can later be combined, whereby a final product is obtained, which can have for example different layers, or both primary webs can be processed separately in order to obtain two different final products.

In the following the arrangement used in the method according to the invention is described in more detail with reference to the schematic drawing.

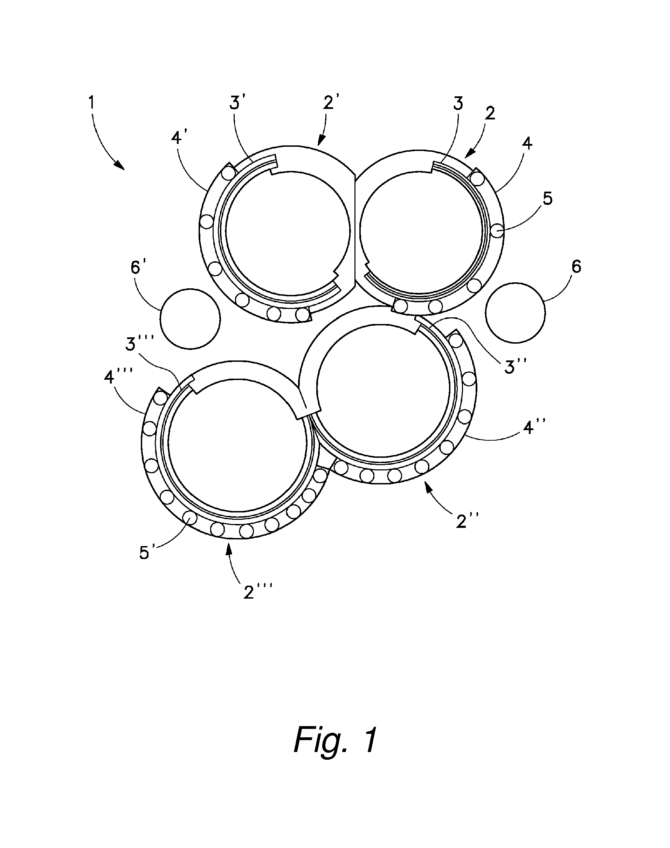

Fig. 1 shows a schematic front view of the arrangement used in the method according to the invention.

The arrangement 1 comprises four fiberising rotors 2, 2', 2" and 2"'. Blow-off means 3, 3', 3" and 3'" have been arranged around the active mantle surfaces of the fiberising rotors 2, 2', 2" and 2"', with which blow-off means the mineral fibres to be formed at the mantle surfaces are blown towards the collecting member (not shown) situated in front of the fiberising apparatus. The blow-off means 3, 3', 3" and 3'" comprise a gap nozzle, with which air is blown at an average speed of 150-300 m/s. Binder means 4, 4', 4" and 4'" comprising a number of round individual nozzles 5, 5', are arranged on the side of the blow-off means 3, 3', 3" and 3"', which is away from the mantle surfaces. The number of individual nozzles of the binder means 4, 4', 4", 4"' depends on which fiberising rotor 2, 2', 2", 2'" the binder means 4, 4', 4", 4'" surrounds. Since the least fibres are typically formed on the first fiberising rotor 2, also the supplied amount of binder is smaller at the active mantle surface of this rotor 2, whereby also the number of individual nozzles of the binder means 4 can be smaller. In a corresponding manner, the amount of formed fibres is larger on the third and fourth fiberising rotor 2", 2"', which naturally increases the need of supplied binder. Thus also the number of individual nozzles of the binder means 4", 4"' is preferably larger than at the first rotor 2.

Halfway in the first and third fiberising rotor 2, 2", outside their binder means, has been arranged an addition means 6 for aerogel material. A corresponding addition means 6' has been arranged on the other side of the fiberising apparatus, on average halfway in the second and the fourth fiberising rotor. The addition means 6, 6' for aerogel material comprise round nozzle openings, which are usually significantly larger that the individual nozzles meant for feeding binder. The addition means 6, 6' are preferably arranged in such a location around the fiberising rotors that as good a mixing as possible of the aerogel material with the fresh fibres can be ensured. Simultaneously it is aspired to add binder to the aerogel material as effectively as possible.

It is obvious to a man skilled in the art that the invention is not limited merely to the above-described examples but the invention may vary within the scope of the claims presented below.

## Claims

1. Mineral wool composite material comprising mineral wool fibres, at least one binder component and an aerogel material **characterized in that** the aerogel material is uniformly distributed within the mineral fibres.

2. Mineral wool composite material according to claim 1, wherein aerogel content of the aerogel material is between 1-100% by weight.

3. Mineral wool composite material according to claim 1, wherein the aerogel material comprises a fibre component and an aerogel component.

4. Mineral wool composite material according to claim 3, wherein the amount of the aerogel component is preferably 10 - 40 % by weight, more preferably 15 - 30 % by weight.

5. Mineral wool composite material according to any of the preceding claims, wherein the amount of aerogel material in the composite material is 5-30 %, preferably 21-27 % and more preferably 22-25 % by weight calculated from the total weight of the composite.

6. Method for manufacture of mineral wool composite material comprising a mineral fibre material and an aerogel material, in which method
a) mineral melt is fed to the mantle surface of the first rotor of the fiberising apparatus, wherefrom the mineral melt is thrown to the mantle surface of the second rotor, and thence onwards to the mantle surface of a possible subsequent rotor, whereby mineral fibres are formed on the active mantle surfaces of the rotors, the fiberising apparatus comprising at least two, typically three or more, fiberising rotors which rotate around a horizontal or nearly horizontal axis,
b) the formed fibres are blown from the active mantle surfaces of the rotors of the fiberising apparatus towards the collecting means, which is arranged at a distance from the fiberising apparatus, and blow-off means are used for the blowing, which blow-off means are arranged to surround the active mantle surfaces of the rotors of the fiberising apparatus and which are arranged in the immediate vicinity of the active mantle surfaces,
c) an aerogel material is added with the aid of addition means for aerogel material arranged on the side of binder means, which is away from the blow-off means
d) at least one binder component is added, with the aid of the binder means arranged in the immediate vicinity of the blow-off means, to the mixture of fresh fibres formed at the mantle surfaces and aerogel material **characterized in that**
e) the aerogel material is added to the mass of the fresh fibres, which are formed on the mantle surfaces.
Mineral wool composite material obtainable by method according to claim 6.
Use of the mineral wool composite material according to any of claims 1-5 or 7 as an insulation material.
